# EUROPÄISCHE PATENTANMELDUNG

(11) **EP 1 080 880 A1**
(43) Veröffentlichungstag der Anmeldung: **07.03.2001**
(21) Anmeldenummer: 99810751.0
(22) Anmeldetag: 20.08.1999
(51) Int. Cl.: B32B 27/08, B32B 15/08, B65D 65/40, G03G 8/00, G03G 7/00

(54) **Verpackungsmaterialien mit teilflächig angeordnetem Materialauftrag**

(71) Anmelder: Alusuisse Technology & Management AG, 8212 Neuhausen am Rheinfall (CH)
(72) Erfinder: Rosenberger, Karolina, 8218 Osterfingen (CH); Ventriglia, Enzo, 8200 Schaffhausen (CH); Bönsch, Fabian, 72336 Balingen (DE); Ziegler, Andreas, 8234 Stetten (CH)

(57) **Zusammenfassung**

Flexible folienförmige Verpackungsmaterialien sind mit einem wenigstens teilflächig angeordneten Materialauftrag in Form eines Bild- und/oder Zeichenmusters versehen, wobei das Verpackungsmaterial als Materialauftrag ein- oder beidseitig das Aufschmelz- oder Trocknungsprodukt wenigstens eines Toners in vorbestimmt geordnetem Zustand aufweist. Der oder die Toner werden in einem elektrophotographischen Verfahren auf die Oberfläche des Verpackungsmaterial thermisch fixiert. Die auf diese Art bedruckten Oberflächen sind insbesondere Metallfolien, bevorzugt Folien aus Aluminium und seinen Legierungen oder Kunststoff-Folien.

## Beschreibung

Vorliegende Erfindung betrifft flexible folienförmige Verpackungsmaterialien aus einer Monofolie oder einem Folienverbund mit einem wenigstens teilflächig angeordneten Materialauftrag in Form eines Bild- und/oder Zeichenmusters, ein Verfahren zu deren Herstellung und die Verwendung derselben.

Es ist bekannt, Verpackungsmaterialien, wie Papiere, Kunststoff-Folien oder Metallfolien zu bedrucken. Zur Bedruckung werden die Druckfarben z.B. mittels Druckzylinder, Druckplatte oder durch Siebdruck auf das Verpackungsmaterial aufgetragen. Entsprechend der Anzahl Farben erhöht sich der Druckaufwand. Das Druckmuster muss über eine oder mehrere Druckformen auf das Verpackungsmaterial übertragen werden. Die Druckverfahren sind ausgereift und ermöglichen eine rationelle Fertigung grosser Mengen an Verpackungsmaterialien mit einheitlichen Druckmotiven. Das Bedrucken kleiner Lose von Verpackungsmaterialien wird jedoch, bedingt durch die Herstellung der Druckformen und das Auswechseln der Druckformen in den Druckmaschinen, aufwendig, zeitintensiv und entsprechend teuer. Die Kunden verlangen jedoch immer mehr Flexibilität. So werden beispielsweise Lieferfristen immer kürzer angesetzt, das Verpackungs-Layout wird entsprechend saisonaler Aktivitäten wie Ostern, Weihnachten, usw. häufiger geändert oder Verpackungsmaterialien sollen in verschiedenen Sprachen angeboten werden, um nur ein paar Beispiele zu nennen.

Es ist deshalb ein Bedürfnis, bedruckte Verpackungsmaterialien zur Verfügung zu haben, die auf einfache Weise in beliebig kleinen Auflagemengen wirtschaftlich hergestellt werden können, wobei der Wechsel von einer zur nächsten Druckvorlagen schnell und ohne übermässigen Aufwand erfolgen soll. Im weiteren wird bevorzugt, das Verpackungsmaterial als Rollenware zur weiteren Verwendung in Verpackungsmaschinen zur Verfügung zu haben.

Aufgabe vorliegender Erfindung ist es, derartige Verpackungsmaterialien und ein Verfahren zu deren Herstellung zu beschreiben.

Erfindungsgemäss wird dies dadurch erreicht, dass das Verpackungsmaterial ein- oder beidseitig das Aufschmelz- oder Trocknungsprodukt wenigstens eines festen, pastösen oder flüssigen Toners in vorbestimmt geordnetem Zustand als Materialauftrag aufweist.

Der Toner kann in fester Form, z.B. pulverförmig, wachs- oder harzartig oder in flüssiger oder pastöser Form vorliegen. Der Toner kann beispielsweise ein Zweikomponenten-Toner, wie Trockentoner, beispielsweise in Pulverform vorliegend, oder Flüssigtoner sein. Weiters kann der Toner in zweckmässiger Ausführung auch ein Einkomponenten-Toner aus beispielsweise Harzpartikeln sein, in denen unter anderem Pigmente dispergiert sind. Bevorzugt sind Einkomponenten-Toner in Form von Harzpartikeln und besonders bevorzugt sind Trockentoner in Pulverform.

Der Toner wird zweckmässig mittels eines elektrophotographischen Verfahrens auf das Verpackungsmaterial aufgebracht, wobei nachfolgend die Ausübung dieses Verfahrens als "bedrucken" und das Verfahrensergebnis als "Druck" bezeichnet wird. Beim elektrophotographischen Verfahren kann es sich um ein indirektes oder direktes elektrophotographisches Verfahren handeln. Bevorzugt wird ein indirektes elektrophotographisches Verfahren angewendet, wie es z.B. aus der Xerographie bekannt ist. Elektrophotographische Verfahren sowie die dazu verwendeten Toner sind beispielsweise in "Ullmann's Encyclopedia of Industrial Chemistry, Sixth Edition, 1999, Electronic Release: Chapter 2.1.1. Electrophotography" näher beschrieben.

Ein Trockentoner besteht beispielsweise aus einem Entwickler und dem eigentlichen Pigmenttoner. Der Entwickler, auch Carrier genannt, besteht aus geladenen Teilchen einer Grösse von z.B. 10 bis 70 µm und ist dominanter Bestandteil des Gemisches. Er dient zum Transport des Pigmenttoners auf die zu bedruckende Oberfläche. Die Pigmenttoner sind feinstteilige Partikel in einer Grösse von z.B. 3 bis 25 µm aus einem bei Temperaturen von 50 bis 140°C erweichenden oder schmelzenden Trägermedium mit 5 bis 10 Gew.-%, bezogen auf das Trägermedium, schwarzen, weissen oder farbigen Pigmenten oder Farbstoffen in der Grösse von ca. 1 µm. Als Trägermedium können z.B. Carnauba-Wachse oder Polymere mit kleinen Molmassen aus den Reihen der Copolymere des Styrols mit Methacrylaten oder Acrylaten, eingesetzt werden. Als farbige Pigmente, resp. Farbstoffe, können z.B. Phtalocyanine, als schwarzes Pigment können Russe (carbon black) und als weisses Pigment kann z.B. Titandioxid, verwendet werden. Die Fixierung des Trockentoners geschieht durch An- bzw. Aufschmelzen des Pigmenttoners an die zu bedruckende Oberfläche.

Ein Einkomponenten-Toner besteht beispielsweise aus Harzpartikeln, wie Styrolacrylat-Harz-Partikel, in denen Pigmente, teils auch magnetische Pigmente, wie Eisenoxide, dispergiert sind. Bei diesem Toner übernehmen die Harzpartikel die elektrischen Ladungen. Die Fixierung des Toners geschieht durch An- bzw. Aufschmelzen der Harzpartikel an die zu bedruckende Oberfläche.

Flüssigtoner sind beispielsweise Zweikomponenten-Toner, bei denen der Entwickler (Carrier) eine Flüssigkeit ist. Sie bestehen aus kleinen Pigmentteilchen von z.B. 1 µm oder weniger, die in einer leicht flüchtigen dielektrischen Flüssigkeit dispergiert sind. Die Fixierung eines Flüssigtoners geschieht durch Antrocknen des Toners an die zu bedruckende Oberfläche.

Beim Bedrucken wird auf den zu bedruckenden Oberflächen des Verpackungsmaterials mittels eines elektrophotographischen Verfahrens das Tonermaterial in vorbestimmt geordnetem Zustand, nämlich entsprechend einer Druckvorlage, aufgebracht und unter Bildung des Aufschmelz- oder Trockungsproduktes fixiert.

Das Verpackungsmaterial kann beispielsweise ein ein- oder mehrschichtiges folienartiges Material sein. Die freiliegenden Seiten des Verpackungsmaterials können aus Kunststoffen, Metallen oder keramischen Materialien sein. Mehrschichtige Materialien können Verbunde aus zwei oder mehreren Schichten bzw. Folien, z.B. enthaltend Papiere und Kunststoffe oder Papiere und Metallfolien oder Kunststoffe und Metallfolien oder Papiere, Kunststoffe und Metallfolien sein.

Beispiele von Papieren sind Pack- und Hüllpapiere oder Etikettenpapiere. Die Papiere können Pergamin-, Pergament oder Pergamentersatzpapiere sein. Die Oberflächen der Papiere können maschinenglatt oder einseitig glatt sein und können satiniert, gekreppt, gefärbt oder ungefärbt sein. Fallweise können die Papiere Synthetikfasern enthalten. Die Papiere weisen beispielsweise eine Flächenmasse von 10 bis 300 g/m² auf, wobei eine Flächenmasse von 20 bis 180 g/m² vorteilhaft ist.

In möglicher Ausführungsform weist das Papier eine Beschichtung auf und stellt ein Verbundmaterial dar, welches auf wenigstens einer Seite mit einer Kunststoff-Folie und/oder einer Metallfolie kaschiert ist oder eine Extrusions- oder Coextrusionsbeschichtung, Dispersionsbeschichtung, Paraffinbeschichtung, Hotmeltbeschichtung, Wachsbeschichtung oder eine Lackschicht trägt. Zur Verbesserung der Verbundhaftung zwischen Papier und Kunststoff kann fallweise eine Corona-Entladung, eine Flammenbehandlung, oder eine Plasmabehandlung einzeln oder kombiniert mit einer Ozonbehandlung an den verschiedenen Materialien vorgenommen werden. Die Extrusionsschicht kann eine Flächenmasse von z.B. 1 bis 200 g/m², zweckmässig von 1 bis 100 g/m², aufweisen. Die Beschichtung ist insbesondere unmittelbar direkt auf das Papier aufgebracht. Die Paraffin-, Wachs- oder Hotmelt-Beschichtung kann z.B. eine Flächenmasse von 1 bis 20 g/m² aufweisen.

Beispiele von Metallfolien als Verpackungswerkstoff sind Folien aus Eisen, Stahl, Kupfer und bevorzugt aus Aluminium und seinen Legierungen. Die Aluminiumfolien können aus Aluminium mit einer Reinheit von 98,5, zweckmässig 99,0 und insbesondere 99,9 sein. Gut geeignete Legierungen für Folien sind beispielsweise aus einer Aluminiumlegierung der Reihen AlMn, AlFeMn, wie AlFel,5Mn, AlFeSi oder AlFeSiMn, beispielsweise in einer Reinheit von 97,5 und höher, vorzugsweise in einer Reinheit von 98,5 und höher, sein. Die Metallfolie ist vorzugsweise eine ununterbrochene Folie. Die Metallfolie ist zweckmässig texturfrei und homogen. Die Metallfolie kann Oberflächen mit Reliefstrukturen, z.B. durch Prägung hergestellt, aufweisen.

Beispiele von Kunststoffen als Verpackungswerkstoff sind Polyester, Polyamide, Polycarbonate, Polyolefine, Polyvinylchlorid, Polyvinylidenchlorid, Polyvinylacetate, Cycloolefin-Copolymer, Acrylnitril-Butadien-Styrol-Copolymer und seine Polyblends oder auf Cellulose basierende Werkstoffe.

Die Dicke des Verpackungsmaterials kann beispielsweise von 5 µm bis 1000 µm betragen. Zweckmässig sind Dicken von 15 bis 200 µm. Für Papiere, die wenigstens auf einer Seite mit Kunststoffen oder mit einer Metallfolie beschichtet sind, kann die Dicke von 5 bis 500 µm, vorzugsweise 30 bis 300 µm, betragen. Kunststoff-Folien sind beispielsweise von 8 bis 1000 µm dick. Metallfolien können eine Dicke von 5 bis 300 µm, vorzugsweise von 10 bis 225 µm, aufweisen. Bilden zwei oder mehrere Materialien einen Verbund, so kann die Dikke des Verbundes 13 bis 500 µm betragen.

Träger des Aufschmelz- oder Trocknungsproduktes von Toner sind insbesondere die Oberflächen von Folien oder Schichten aus Metallen, insbesondere aus den vorstehend beschriebenen Metallen, wobei die Metalloberflächen mit einem Primer oder Lack versehen sein können. Besonders geeignet sind Oberflächen von Folien oder Schichten aus Aluminium und seinen Legierungen. Oberflächenschichten aus Metall sind beispielsweise auf eine Kunststoff- oder Metallfolie durch z.B. chemisches oder physikalisches Verdampfen aufgetragen.

Weitere bevorzugte Träger solcher Aufschmelzprodukte sind die Oberflächen von Folien oder Schichten aus Kunststoff. Die Kunststoff-Folien bzw. -schichten können z.B. durchsichtig, durchscheinend oder opak und/oder angefärbt oder durchgefärbt und/oder mit Füllstoffen oder Verstärkungsmaterialien durchsetzt sein. Besonders bevorzugte Kunststoffe sind Polyvinylchlorid (PVC), Polyvinylidenchlorid (PVDC), Polyolefine und besonders Polyethylene (PE), wie Polyethylen hoher Dichte (HDPE), Polyethylen mittlerer Dichte (MDPE), lineares Polyethylen mittlerer Dichte (LMDPE), Polyethylen niedriger Dichte (LDPE) und lineares Polyethylen niedriger Dichte (LLDPE), dann auch Polypropylene (PP), wie cast-Polypropylen (cPP) oder biaxial orientiertes Polypropylen (oPP), Polyamide (PA) wie Polyamid 6, Polyamid 11, Polyamid 12, Polyamid 6,6, Polyamid 6,10, Polyamid 6,12, oder Polyamid 6-3-T. Die Folien aus Polyamid können mono- oder vorzugsweise biaxial orientiert sein (oPA). Weitere geeignete Kunststoffe sind Cycloolefin-Copolymere (COC). Dies sind thermoplastische Olefin-Polymere mit amorpher Struktur, die im wesentlichen Copolymere aus Ethylen und 2-Norbornen oder Tetracyclododecen darstellen. Der Norbornen-Gehalt im Ethylen-Norbornen-Cycloolefin-Copolymeren kann beispielsweise von 12 bis 80 Mol-%, vorzugsweise 52 Mol-%, betragen. Die Polymerisation kann durch Metallocen-Katalysatoren, einer Polymersation in Lösung und dem Druck des Ethylens gesteuert werden. Die Cycloolefin-Copolymere können amorph sein oder Kristallinität aufweisen. Weitere bevorzugte Kunststoffe sind Acrylnitril-Butadien-Styrol-Copolymere (ABS) oder Polyblends davon.

Des weiteren können auch Papierschichten, beispielsweise Papierschichten der vorstehend beschriebenen Art, Träger eines Aufschmelz- oder Trocknungsproduktes eines oder mehrerer Toners sein.

Die Bedruckung in Form eines Aufschmelz- oder Trocknungsproduktes des oder der Toner kann auf einer oder beiden Oberflächen einer Folie aufliegen. Die Bedruckung kann auch ein Konterdruck auf der Innenseite, d.h. dem Folienverbund zugewandten Seite, einer aussen liegenden und/oder innen liegenden Folie des Folienverbundes sein. Ein Konterdruck ist besonders für durchsichtige und durchscheinende Folien geeignet.

Das Verpackungsmaterial kann als Monofolie aus einer der vorgenannten, als Träger des Aufschmelz- oder Trocknungsproduktes von Toner geeigneten Metall- oder Kunststoff-Folien ausgebildet sein. Das Aufschmelz- oder Trocknungsprodukt des oder der Toner kann auf einer oder beiden Oberflächen der Folie aufliegen. Weiters kann die Monofolie ein- oder beidseitig mit einem Primer oder Lack versehen sein, auf welchem das genannte Aufschmelz- bzw. Trocknungsprodukt aufgetragen ist. Die Oberfläche oder Oberflächen der Folie kann nach Auftrag des Aufschmelz- bzw. Trocknungsproduktes teil- oder vollflächig mit einem Schutz- oder Siegellack versehen sein.

Weiters kann das Verpackungsmaterial ein Verbund von Folien und/oder Schichten mit einem Lagenaufbau der vorgenannten Art sein, enthaltend eine oder mehrere der vorgenannten, als Träger des Aufschmelz- oder Trocknungsprodukt eines Toners geeigneten Folien bzw. Schichten aus Kunststoff und/oder Metall. Das Aufschmelz- oder Trocknungsprodukt des oder der Toner kann auf einer oder beiden Oberflächen einer oder mehrerer dieser geeigneten Folien bzw. Schichten aus Kunststoff, Papier und/oder Metall fixiert sein. Die vorgenannten geeigneten Folien oder Schichten können im Folienverbund aussen oder innen, d.h. zwischen zwei weiteren Folien oder Schichten, liegen. Vorteilhaft liegen solche geeigneten Folien bzw. Schichten ein- oder beidseitig aussen am Folienverbund, wobei eine oder beide der freien Oberflächen des Folienverbundes Träger des Aufschmelz- oder Trocknungsproduktes des oder der Toner sind. Die Oberfläche oder Oberflächen der Folie kann nach Auftrag des genannten Aufschmelz- bzw. Trocknungsproduktes teil- oder vollflächig mit einem Schutz- oder Siegellack versehen sein.

Metall-Kunststoff-Verbunde können beispielsweise die Schichtabfolge (Al / Kunststoff), (Al / Lack), (Lack / Al / Kunststoff), (Kunststoff / Al / Kunststoff), etc. enthalten oder daraus bestehen, wobei die Aufzählung in Klammern jeweils ein durch Schrägstriche dargestellter Lagenaufbau beschreibt.

Beispiele solcher Verbunde sind: (cPP / oPA / Al / cPP); (oPA / Al / oPA); (oPA / Al / PE); (oPA / Al / PP); (oPA / Al / PVC); (oPA /Al / PE-beschichtet); (oPA / Al / oPA / EAA); (oPA / Al / oPA / HS-Lack); (PP / oPP / Al / oPP / PP); (PE / oPA / Al / oPA / PE); (PVC / oPA / Al / PVC); (PP / oPA / Al / PP); (Al / PP), wobei oPA für orientiertes Polyamid, oPP für orientiertes Polypropylen, cPP für gegossenes (cast) Polypropylen, PVC für Polyvinylchlorid, PE für Polyethylen, PP für Polypropylen, EAA für Copolymer von Ethylen und Acrylsäure, HS-Lack für Heiss-Siegellack und Al für Aluminium steht und die Schichtdicken der Verbunde vorzugsweise zwischen 13 und 500 µm liegen. Es können die Kunststoff-Folien bzw. -schichten und/oder die Metallfolien bzw. -schichten mit dem Aufschmelz- oder Trocknungsprodukt eines Toners beschichtet sein.

Kunststoffverbunde können beispielsweise die Schichtabfolge (PET / oPA / PE); (PET / oPP / PE) oder (PET / LLDPE), etc. enthalten oder daraus bestehen, wobei PET für Polyethylenterephthalat und LLDPE für lineares Polyethylen niedriger Dichte steht. Zwischen den einzelnen Schichten können weiters zusätzliche Barriereschichten vorgesehen sein. Die Schichtdicken der Verbunde liegen vorzugsweise zwischen 13 und 500 µm.

Papierverbunde können beispielsweise die Schichtabfolge (Al / Papier), (Kunststoff / Aluminium / Papier) oder (Papier / Kunststoff), etc. enthalten. Die Schichtdicken der Verbunde liegen vorzugsweise zwischen 13 und 500 µm.

Die als bevorzugt genannten Aluminiumfolien werden beispielsweise in Rollenform (Coils) eingesetzt, wobei der Walzbarren, aus dem die Folie gefertigt wird, mittels eines Schmiermittels aus der Reihe der mineralischen oder synthetischen Öle während des Walzens geschmiert wird und nach dem Walzen auf Endstärke die Coils warm ausgelagert werden. Die Oberflächen der Aluminiumfolien weisen nach der Auslagerung einen Film aus Öl oder aus dessen Abbauprodukten auf. Dieser Ölfilm oder die Abbauprodukte werden vor dem Aufbringen des Aufschmelzproduktes vorteilhaft teilweise oder vollständig entfernt.

Die freien Oberflächen, sowohl der Kunststoff-Folien, wie auch der Metallfolien, können vor dem Auftrag des Toners durch beispielsweise Coronaentladung, Plasma, Aerosole vorbehandelt werden. Die freien Oberflächen können vor dem Auftrag des Toners mit einem Primer und/oder einem Schutz- oder Decklack und/oder einer keramischen Schicht, die z.B. in einem Vakuumdünnschichtverfahren aufgetragen worden ist, ganz oder teilweise, bedeckt sein.

Typische Primer sind z.B. Acryllacke oder PVC-Copolymer-Lacke, Nitrocelluloselacke. Als Schutz- oder Decklacke können Standard-Überlacke (z.B. Wasserlacke, Nitrocelluloselacke, PVC-Lacke) oder Lacke mit UV-Absorption, EB-Härtung eingesetzt werden.

Keramische Schichten aus z.B. SiOₓ, wobei x eine Zahl von 1,2 bis 2 sein kann, oder aus Al₂O₃, können durch Sputtern oder durch chemisches oder physikalisches Verdampfen von Targetmaterialien erzeugt werden, wobei die keramische Schicht auf der zu beaufschlagenden Oberfläche vorteilhaft in einer Dicke von 5 bis 500 nm (Nanometer) abgeschieden ist.

Werden beide Seiten bzw. Oberflächen einer Folie bedruckt, so kann die beidseitige Bedruckung beispielsweise an derselben Station erfolgen, wobei jeweils nacheinander auf die beiden Seiten in einem elektrophotographischen Verfahren das oder die Aufschmelz- oder Trockungsprodukte des oder der Toner als Bild- und/oder Zeichenmuster aufgebracht wird.

Die beidseitige Bedruckung kann auch an mehreren Stationen erfolgen, wobei an einer oder mehreren ersten Stationen die erste Seite und an einer mehreren weiteren Stationen die zweite Seite bedruckt wird. Handelt es sich bei den beidseitig zu bedruckenden Verpakkungsmaterialien um Aluminium-Kunststoffverbunde, so wird letzteres Verfahren vorgezogen.

In einer weiteren erfindungsgemässen Ausführungen weist die Verpackungsfolie bereits einen Vordruck auf, welcher beispielsweise in einem der herkömmlichen Verfahren, wie Flexodruck, oder erfindungsgemäss als Aufschmelz- oder Trocknungsprodukt eines Toners aufgetragen ist. Weitere erfindungsgemässe Bedruckungen können auf dieselbe Folie, welche bereits einen Vordruck aufweist, oder auf einer darüberliegende Kunststoff-Folie oder Lackschicht aufgetragen sein. Der Vordruck kann beispielsweise ein Basis-Bild- und/oder Textmuster auf der Folie sein. Weitere Bedruckungen gemäss Erfindung können sodann das vorhandene Druckbild mit weiteren Bild-, Text- und/oder Zeichenelementen ergänzen und dadurch dem Produkt bzw. der Produkteserie eine z.B. saisonabhängige Individualität verleihen.

Das durch die Bedruckung erzeugte Bild- und/oder Zeichenmuster kann beispielsweise Zeichenfolgen, Abbildungen, Muster, Raster, Zufallsmuster enthalten. Das Bild- und/oder Zeichenmuster kann in Farbe, Schwarz, Weiss oder Grautönen und dergl. vorliegen.

Das Bild- und/oder Zeichenmuster basiert zweckmässig auf einer Druckvorlage. Die Daten der Druckvorlage liegen vorzugsweise als Digitalgrössen vor und werden beispielsweise mittels Desktop-Publishing, d.h. mittels Programmen zur Bild- und Textverarbeitung oder dergl. unter Verwendung von Anlagen zur Elektronischen Datenverarbeitung (EDV) erzeugt oder überarbeitet.

Die Daten können beispielsweise auf einem magnetischen, magnetooptischen oder optischen Speichermedium gespeichert sein. Es ist auch möglich, in Form von Analogdaten vorliegende Druckvorlagen unter Einsatz entsprechender Mittel, wie EDV-Anlagen und Datenverarbeitungsprogramme, elektronisch zu erfassen und mittels eines Analog-Digital-Umsetzers in Digitalsignale umzuwandeln und weiterzuverarbeiten. Die als digitale Grössen vorliegende Daten der Druckvorlagen werden zweckmässig über ein elektrophotographisches Verfahren auf die Verpackungsmaterialien reproduziert.

Farbige Bild- und/oder Zeichenmuster werden zweckmässig durch mehrmalige, hintereinander durchgeführte Druckvorgänge erzeugt, wobei z.B. bei jedem Druckvorgang ein Toner der entsprechenden Farbe verwendet wird.

Weiters können zwei oder mehrere Druckvorlagen z.B. über Text- und/oder Bildbearbeitungsprogramme mittels EDV zu einem vollständigen Bild- und/oder Zeichenmuster verarbeitet werden. Neben einer Druckvorlage kann beispielsweise eine kontinuierlich, für jede zu bedruckende Fläche wechselnde, oder in anderer Sequenz wechselnde, weitere Druckvorlage einkopiert werden, wobei unter einkopieren bzw. kopieren die Reproduktion einer zweckmässig in elektronischer Datenform vorliegende Druckvorlage zu verstehen ist. Dies ermöglicht, beispielsweise Seriennummern, Druckmuster- oder farbunterschiedliche Verpackungsmaterialien für Einzelverpackungen und dergl., in einem Arbeitsgang zu fertigen. Eine Druckvorlage kann ein- und/oder mehrfach reproduziert werden.

In einer zweckmässigen Ausführung der Erfindung wird die Verpackungsfolie als Verbund- oder Monofolie hergestellt. Nachfolgend wird deren eine oder beide freien Oberflächen gemäss Druckvorlage bedruckt und gegebenenfalls weiteren Beschichtungen unterzogen. Nach einer eventuellen Zwischenlagerung, z.B. in Rollenform (Coils), wird die ein- oder beidseitig bedruckte Verpackungsfolie zu Verpackungen weiterverarbeitet, wobei die Verpackungsfolie zuvor noch mit einem Lack, z.B. Schutz- oder Siegellack versehen werden kann.

In einer weiteren Variante werden ausgewählte Folien ein- oder beidseitig an ihren freien Oberflächen bedruckt. Nach einer eventuellen Zwischenlagerung, z.B. in Rollenform (Coils), werden die bedruckten Folien mit weiteren, gegebenenfalls auch bedruckten, Folien zu einem Folienverbund als Verpackungsmaterial weiterverarbeitet. Nach einer weiteren eventuellen Zwischenlagerung, z.B. in Rollenform (Coils), wird das Verpackungsmaterial zu Verpackungen weiter verarbeitet. Letzeres Verfahren wird insbesondere angewendet, wenn die zu bedruckenden Folienoberflächen keine freien Oberfläche innerhalb des Folienverbundes sind.

Liegt das Verpackungsmaterial in Rollenform vor, so kann mit einer Foliendurchlaufbedruckungsanlage ein kontinuierliches Bedrucken erfolgen, durch Abhaspeln des Verpakkungsmaterials, Bedrucken des Verpackungsmaterials durch ein elektrophotographisches Verfahren und Aufhaspeln des bedruckten Verpackungsmaterials zu Rollenware.

Das Bedrucken des Verpackungsmaterials kann z.B. als gesonderter Verfahrensschritt ausgeführt werden, wobei die Verpackungsfolie z.B. von Rollen abgerollt, bedruckt und wieder auf Rollen aufgehaspelt und an die nächste Station, z.B. zur Zwischenlagerung, weitergegeben wird.

Das Bedrucken kann auch als Verfahrensschritt im kontinuierlichen Herstellungsprozess von Verpackungsmaterialien bzw. von Verpackungen integriert sein.

Bei beidseitigem Bedrucken der Verpackungsmaterialien bzw. der Folien kann das Bild- und oder Zeichenmuster auf beiden Seiten gleich oder verschieden sein. In einer bevorzugten Ausführungsform enthält das Verpackungsmaterial oder eine Folie zwei durch eine durchsichtige Kunststoffschicht in Abstand gehaltene Folienoberflächen durch Aufschmelz- oder Trocknungsprodukte des oder der Toner erzeugte Bild- und/oder Zeichenmuster. Der Abstand zwischen den Bild- und/oder Zeichenmuster und die Distanz zwischen benachbarten, den Bild- und/oder Zeichenmustern zugrunde liegenden Bildelementen sind zweckmässig derart aufeinander abgestimmt, dass sich bei Änderung des Betrachtungswinkels die optische Wahrnehmung des durch die Überlagerung der Bild- und/oder Zeichenmuster erzeugten Gesamtbildes ändert.

Bei durchsichtigen oder durchscheinenden Verpackungsmaterialien können beispielsweise die gleichen Linien-, Punkt- oder Rastermuster, die ihrerseits ein Bildmuster ergeben können, beidseitig übereinander oder um etwa eine Linien- oder Rasterbreite oder Punktdurchmesser verschoben, angebracht sein. Entspricht die Linien- oder Rasterbreite oder der Punktdurchmesser etwa der Dicke des Verpackungsmaterials, wird durch die Überlagerung der Bildmuster die optische Wahrnehmung des Gesamtbildes geändert. Dieser Effekt kann auch erreicht werden durch einseitiges Bedrucken von zwei durchsichtigen Verpackungsmaterialien und Kaschieren der beiden Materialien, wobei die beiden Druckbilder einander nicht anliegen dürfen. Weitere Effekte können erreicht werden, durch Kaschieren eines derart beidseitig bedruckten Verpackungsmaterials gegen eine Metallfolie oder dem einseitigen Bedrucken eines durchsichtigen Verpackungsmaterials, dem einseitigen Bedrucken einer Metallfolie und Kaschieren der bedruckten Seite der Metallfolie gegen die unbedruckte Seite des Verpackungsmaterials. Die Metallfolie kann, den Bedruckungen zugewandt, eine spiegelnde Schicht oder eine Hochglanzoberfläche aufweisen.

Das erfindungsgemäss bedruckte Verpackungsmaterial kann als solches verwendet werden. Es ist möglich, das Verpackungsmaterial nach vorliegender Erfindung weiter zu veredeln und beispielsweise ein oder beidseitig weitere Schichten aufzubringen. Dies können Deck- oder Schutzlacke, Extrusionskaschierungen, aufkaschierte Folien oder teilflächig aufgebrachte Heiss-Siegellacke sein.

Das Verpackungsmaterial kann in Abschnitte aufgeteilt und als Einwickler, als Einschlag, insbesondere Dreheinschlag, als Umschlag, als Deckelmaterial für beispielsweise Gefässe oder Warenträger eingesetzt werden. Durch Heiss- oder Kaltsiegeln kann das Verpackungsmaterial zu Beuteln, wie Flachbeuteln, Bodenbeuteln oder Standbeuteln, Taschen, Säcken, Tüten oder Kissenverpackungen verarbeitet werden. Durch Tief- und/oder Streckziehen können Warenträger, wie Bodenteile von Durchdrückpackungen, Blisterpackungen, Menueschalen, Gobelets, Becher, Dosen und dergl. gefertigt werden. Durch Falten und fallweise Siegeln können Umverpackungen erzeugt werden. Vorliegendes Verpackungsmaterial ist durch seine leichte Herstellbarkeit und die einfache Änderung der Bild- und/oder Zeichenmuster ganz besonders geeignet für kleine Lose an Verpackungsmaterial, wie beispielsweise für Verpackungen von pharmazeutischen Spezialitäten oder Verpackungen mit Sicherheitsmerkmalen oder zur Erzeugung von Verpackungen mit jeweils einem einzigen individuellen Muster auf jeder Verpackung. Die Druckvorlagen können durch digitale Aufbereitung unter Verwendung entsprechender Datenverarbeitungsprogramme mit Hilfe von EDV beinahe uneingeschränkt bearbeitet und geändert werden.

Beispiele von erfindungsgemäss bedruckbaren Verpackungsmaterialien sind Verpackungs- oder Deckelfolien als Verpackungsmittel für z.B. Käse, wie Weich-, Schmelz oder Frischkäse, oder für Milchprodukten insbesondere für Joghurt, wie Nature- oder Aroma-Joghurt, cremige Dessertspeisen, Cremes sowie für dehydratisierte Nahrungsmittelzubereitungen oder Instantprodukte wie Suppen und dergl. Beispiele solcher Verpackungsmaterialien weisen den folgenden, von aussen nach innen dargestellten Folienaufbau auf:
a) Decklack mit einem Flächengewicht von 1,0 bis 2,0 g/m², insbesondere von 1,2 g/m²;
b) Druckmuster;
c) Papier mit einem Flächengewicht von 20 bis 100 g/m², insbesondere von 45 bis 50 g/m²;
d) vollflächige Klebstoffschicht mit einem Flächengewicht von 2 bis 6 g/m², insbesondere von 3 bis 5 g/m²;
e₁) Kunststoff-Folie aus Polyethylenterephthalat (PET) einer Dicke von 8 bis 16 µm, insbesondere von 12 µm, die auf der gegen die Klebstoffschicht d) weisenden Seite in einer Dicke von 10 bis 60 nm, vorzugsweise 10 bis 30 nm, metallisiert ist;
e2) Kunststoff-Folie aus Polyethylenterephthalat (PET) einer Dicke von 8 bis 16 µm, insbesondere von 12 µm;
f) Primer oder Lack mit einem Flächengewicht von 0,3 bis 0,9 g/m², insbesondere von 0,5 bis 0,7 g/m²;
g) Siegellack, insbesondere einen Heiss-Siegellack, vorzugsweise auf der Basis von Vinyl/Acryl oder PVC/Acryl, mit einem Flächengewicht von 1 bis 3 g/m², insbesondere von 1,9 bis 2,5 g/m².

Die Verpackungs- oder Deckelfolie enthält eine Schicht aus PET entweder mit Metallisierung e₁) oder ohne Metallisierung e₂). Anstelle der Primer- bzw. Lackschicht f) und der Siegellackschicht g) kann auch eine über eine Klebschicht mit einem Flächengewicht von 1,0 bis 1,8 g/m², insbesondere von 1,4 g/m² auf die PET-Folie aufkaschierte Kunststoff-Folie aus Polyethylen (PE) einer Dicke von 40 bis 60 µm, insbesondere von 50 µm vorgesehen sein.

Die erfindungsgemäss bedruckbare Verpackungs- oder Deckelfolie kann auch eine Metallfolie aus Aluminium enthalten und folgenden Aufbau aufweisen:
a) Decklack mit einem Flächengewicht von 0,5 bis 2,0 g/m², insbesondere von 0,9 g/m²; b) Druckmuster;
c) Papier mit einem Flächengewicht von 20 bis 100 g/m², insbesondere von 50 g/m²;
d) vollflächige Klebstoffschicht mit einem Flächengewicht von 2 bis 6 g/m², insbesondere von 4 g/m²;
e) Aluminiumfolie einer Dicke von 6 bis 12 µm, insbesondere von 7 µm;
f) vollflächige Klebstoffschicht mit einem Flächengewicht von 1 bis 3 g/m², insbesondere von 1,4 g/m²;
g) Kunststoff-Folie aus Polyethylen (PE) einer Dicke von 15 bis 80 µm, insbesondere von 45 bis 55 µm.

Ein weiteres erfindungsgemäss bedruckbares Verpackungsmaterial mit einer Aluminiumfolie enthält von aussen nach innen folgenden Folienaufbau:
a) Decklack mit einem Flächengewicht von 1,0 bis 1,4 g/m², insbesondere von 1,2 g/m²;
b) Druckmuster;
c) Primer oder Lack mit einem Flächengewicht von 0,8 bis 1,4 g/m², insbesondere von 1,1 g/m²;
d) Aluminiumfolie einer Dicke von 15 bis 25 µm, insbesondere von 20 µm;
e) vollflächige Klebstoffschicht mit einem Flächengewicht von 2 bis 5 g/m², insbesondere von 3,5 g/m²;
f) Kunststoff-Folie aus Polyethylenterephthalat (PET) einer Dicke von 8 bis 16 µm, insbesondere von 12 µm;
g) Primer oder Lack mit einem Flächengewicht von 0,3 bis 0,9 g/m², insbesondere von 0,6 g/m²;
h) Siegellack, insbesondere einen Heiss-Siegellack, vorzugsweise auf der Basis von PVC/Acryl mit einem Flächengewicht von 1 bis 3 g/m², insbesondere von 2,5 g/m².

Das Druckmuster b) ist jeweils erfindungsgemäss ein wenigstens teilflächig angeordneter Materialauftrag in Form eines Bild- und/oder Zeichenmusters auf der Papierschicht oder auf der Aluminiumfolie bzw. auf deren Beschichtung in der Art eines Aufschmelz- oder Trocknungsprodukt eines Toners.

Weitere erfindungsgemäss bedruckbare Verpackungsmaterialien sind Nahrungsmittelbehälter, wie Becher, Schalen, insbesondere Menuschalen aus einer Folie einer AlMnlMg0,5-Legierung (AA 3005) mit einer Dicke von 70 bis 110 µm, insbesondere von 90 µm, mit einer aussen liegenden blanken Seite und einer inneren über eine Lackkaschierung mit einem Flächengewicht von 4,0 bis 6,0 g/m², insbesondere von 5,0 g/m², aufgebrachten Folie aus Polypropylen (PP) einer Dicke von 20 bis 40 µm, insbesondere von 30 µm. Anstelle einer blanken äusseren Seite kann auch eine Einbrennlackierung in Gold oder dergl. mit einem Flächengewicht von 2 bis 5 g/m², insbesondere von 3,5 g/m², auf der Aluminiumfolie vorgesehen sein.

Neben der obgenannten Al-Legierung können besagte Becher, Schalen auch aus einer Folie einer Al98,6-Legierung mit einer Dicke von 50 bis 70 µm, insbesondere von 60 µm sein, wobei die Al-Folie eine äussere Glanzseite blank oder mit Druckvorlack mit einer Flächenmasse von 1,3 bis 1,7 g/m², insbesondere von 1,5 g/m², und eine innere Mattseite mit einem Haftvermittler mit einem Flächengewicht von 1,2 bis 1,6 g/m², insbesondere von 1,4 g/m², und einer auf die Mattseite bzw. auf den Haftvermittler aufgebrachten schälfähigen Beschichtung aus Polypropylen (PP) mit einem Flächengewicht von 20 bis 30 g/m², insbesondere von 25 g/m². Anstelle eines Druckvorlackes kann auf der Glanzseite auch eine Einbrennlackierung in Gold oder dergl. mit einem Flächengewicht von 2 bis 5 g/m², insbesondere von 3 g/m² vorgesehen sein. Die Bedruckung gemäss Erfindung kann auf die äussere und/oder innere Seite der Aluminiumfolie oder auf eine darüberliegende Primer- oder Lackschicht oder Kunststoff-Folie erfolgen. Weiter Legierungstypen, welche anstelle der vorgenannten verwendet werden können sind beispielsweise A199 oder AlFel,5Mn (AA 8006, AA 8014).

Es ist möglich, dass das Verpackungsmaterial vorbedruckt und gegebenenfalls mit einem Überlack versehen ist und weitere Bedruckungen gemäss Erfindung angebracht werden. Der Vordruck kann z.B. nach einem der herkömmlichen Druckverfahren wie Flexodruck oder als Aufschmelz- oder Trocknungsprodukt eines Toners gemäss Erfindung aufgetragen sein.

Beispiele von erfindungsgemäss bedruckbaren Pharmaverpackungen, insbesondere Blisterverpackungen, sind von folgendem Schichtaufbau, wobei der Schichtaufbau von aussen nach innen angegeben ist:
a) Lackschicht mit einem Flächengewicht von 0,8 bis 1,5 g/m² auf der Basis von Cellulosenitrat, Cellulosenitrat versetzt mit Syloid, Polyester oder von Polyester-Melaminharz;
b) Aluminiumfolie einer Dicke von 10 bis 30 µm, insbesondere 20 µm;
c) Lackschicht mit einem Flächengewicht von 5 bis 9 g/m², insbesondere von 7 g/m² auf der Basis von Vinyl/Acryl, Vinylchlorid-Vinylidenchlorid-Copolymer/Vinylchlorid-Vinylacetat-Copolymer/Acrylat oder von modifiziertem Polypropylen.

Die Bedruckung in erfindungsgemässer Ausführung kann auf die äussere und/oder innere Seite der Aluminiumfolie oder auf einer der anschliessenden Kunststoffschichten erfolgen.

Weitere Beispiele weisen folgenden Schichtaufbau von aussen nach innen auf:
a) Pergaminpapier mit einem Flächengewicht von 30 bis 40 g/m², insbesondere von 35 g/m²;
b) Kaschierkleber mit einem Flächengewicht von 1 bis 4 g/m², insbesondere von 3 g/m² auf der Basis von Polyurethan;
c) Aluminiumfolie einer Dicke von 6 bis 12 µm, insbesondere von 9 µm;
d) Primer oder Lack mit einem Flächengewicht von 1,0 bis 1,4 g/m², insbesondere von 1,2 g/m²;
e) Lack mit einem Flächengewicht von 4 bis 8 g/m², insbesondere von 6 g/m², auf der Basis von Polyester
oder
a) Papier mit einem Flächengewicht von 40 bis 60 g/m², insbesondere von 50 g/m²;
b) Kaschierkleber mit einem Flächengewicht von 1 bis 3 g/m², insbesondere von 2 g/m², auf wasserlöslicher Basis;
c) Aluminiumfolie einer Dicke von 6 bis 12µm, insbesondere von 9 µm;
d) Haftvermittler mit einem Flächengewicht von 0,8 bis 1,2 g/m², insbesondere von 1,0 g/m², auf der Basis von Polyurethan;
e) Kunststoff-Folie aus Polyethylen niedriger Dichte (LDPE) einer Dicke von 30 bis50 µm, insbesondere von 40 µm.

Die Bedruckung kann auf die äussere Seite des Pergaminpapiers und/oder auf die innere Seite der Aluminiumfolie bzw. der Kunststoffschicht oder -Folie erfolgen.

Mit aussen liegenden oder äusseren Folien oder Seiten von Folien sind die dem Verpakkungsinhalt abgewandten und mit innen liegenden oder inneren Folien oder Seiten von Folien sind die dem Verpackungsinhalt zugewandten Folien bzw. Seiten gemeint.

## Patentansprüche

1. Flexible folienförmige Verpackungsmaterialien aus einer Monofolie oder einem Folienverbund mit einem wenigstens teilflächig angeordneten Materialauftrag in Form eines Bild- und/oder Zeichenmusters,
dadurch gekennzeichnet, dass
das Verpackungsmaterial ein- oder beidseitig das Aufschmelz- oder Trocknungsprodukt wenigstens eines festen, pastösen oder flüssigen Toners in vorbestimmt geordnetem Zustand als Materialauftrag aufweist.

2. Flexible folienförmige Verpackungsmaterialien gemäss Anspruch 1, dadurch gekennzeichnet, dass das Aufschmelz- oder Trocknungsprodukt des oder der Toner auf einer Metallfolie oder einer metallbeschichteten Kunststoff- oder Metallfolie aufliegt und die Metallfolie oder Metallschicht vorzugsweise aus Aluminium oder einer Aluminiumlegierung ist.

3. Flexible folienförmige Verpackungsmaterialien gemäss Anspruch 1, dadurch gekennzeichnet, dass auf dem Aufschmelz- oder Trocknungsprodukt des oder der Toner eine oder mehrere weitere Schichten oder Folien aus Kunststoff aufgetragen sind.

4. Flexible folienförmige Verpackungsmaterialien gemäss Anspruch 1, dadurch gekennzeichnet, dass das Aufschmelz- oder Trocknungsprodukt des oder der Toner auf eine Kunststoff-Folie oder -Schicht, vorzugsweise auf eine Folie oder Schicht aus einem Polyvinylchlorid (PVC), Polyvinylidenchlorid (PVDC), Polyethylen (PE), Polypropylen, Polyamid (PA), Cycloolefin-Copolymer (COC) oder Acrylnitril-Butadien-Styrol-Copolymer (ABS) aufgetragen ist.

5. Flexible folienförmige Verpackungsmaterialien gemäss Anspruch 1, dadurch gekennzeichnet, dass das Aufschmelz- oder Trocknungsprodukt des oder der Toner auf eine Papierschicht, vorzugsweise auf ein Pergaminpapier, aufgetragen ist.

6. Flexible folienförmige Verpackungsmaterialien gemäss Anspruch 2, dadurch gekennzeichnet, dass das Verpackungsmaterial ein Folienverbund, enthaltend eine aussen liegende Folie aus Aluminium und eine innen liegende Folie aus Polypropylen ist, und das Aufschmelz- oder Trocknungsprodukt des oder der Toner auf der inneren und/oder äusseren Seite der Aluminiumfolie oder der Kunststoff-Folie aufgetragen ist, und die das Aufschmelz- oder Trocknungsprodukt des oder der Toner tragende Folie vorzugsweise mit einem Schutzlack versehen ist.

7. Flexible folienförmige Verpackungsmaterialien gemäss Anspruch 1, dadurch gekennzeichnet, dass das Aufschmelz- oder Trocknungsprodukt des oder der Toner auf eine Oberfläche aus keramischem Material, vorzugsweise auf SiOₓ, wobei x eine Zahl von 1,2 bis 2 ist, oder auf Al₂O₃, aufgetragen ist.

8. Flexible folienförmige Verpackungsmaterialien gemäss Anspruch 1, dadurch gekennzeichnet, dass zwei durch eine durchsichtige Kunststoffschicht in Abstand gehaltene Folienoberflächen ein durch das Aufschmelz- oder Trocknungsprodukt des oder der Toner erzeugte Bild- und/oder Zeichenmuster enthalten, wobei der Abstand zwischen den Bild- und/oder Zeichenmustern und die Distanz zwischen benachbarten, den Bild- und oder Zeichenmustern zugrunde liegenden Bildelementen so aufeinander abgestimmt sind, dass sich bei Änderung des Betrachtungswinkels die optische Wahrnehmung des durch die Überlagerung der Bild- und/oder Zeichenmuster erzeugten Gesamtbildes ändert.

9. Verfahren zur Herstellung von flexiblen folienförmigen Verpackungsmaterialien mit einem wenigstens teilflächig angeordneten Materialauftrag in Form eines Bild- und/oder Zeichenmusters gemäss Anspruch 1,
dadurch gekennzeichnet, dass
auf das Verpackungsmaterial ein- oder beidseitig mittels eines elektrophotographischen Verfahrens wenigstens ein Toner in vorbestimmt geordnetem Zustand wenigstens teilflächig auf wenigstens eine der Folien oder Schichten aufgebracht und durch Aufschmelzen oder Antrocknen thermisch fixiert wird.

10. Verfahren zur Herstellung von flexiblen folienförmigen Verpackungsmaterialien gemäss Anspruch 9, dadurch gekennzeichnet, dass das Verpackungsmaterial eine Vorbedruckung enthält und mittels eines elektrophotographischen Verfahrens wenigstens teilflächig auf der die Vorbedruckung enthaltenden Folie oder einer darüber angeordneten Folie das Aufschmelz- oder Trocknungsprodukt des oder der Toner aufgetragen wird.

11. Verfahren zur Herstellung von flexiblen folienförmigen Verpackungsmaterialien gemäss Anspruch 9, dadurch gekennzeichnet, dass auf die mit dem Aufschmelz- oder Trocknungsprodukt des oder der Toner versehenen Oberflächen weitere Folien oder Schichten, vorzugsweise aus Kunststoff, aufgebracht werden.

12. Verfahren zur Herstellung von flexiblen folienförmigen Verpackungsmaterialien gemäss Anspruch 9, dadurch gekennzeichnet, dass auf die mit dem Aufschmelz- oder Trocknungsprodukt des oder der Toner versehenen Oberflächen ein Lack, vorzugsweise ein Schutzlack, aufgetragen wird.

13. Verfahren zur Herstellung von flexiblen folienförmigen Verpackungsmaterialien gemäss Anspruch 9, dadurch gekennzeichnet, dass unter Einsatz von Mitteln zur elektronischen Datenverarbeitung (EDV) und Verwendung von Bild- und/oder Textverarbeitungsprogrammen ein Bild und/oder Zeichenmuster in Form einer Druckvorlage erstellt wird und die Daten der Druckvorlage in digitaler Form vorliegen und die Druckvorlage durch ein elektrophotographisches Verfahren auf das Verpackungsmaterial reproduziert wird.

14. Einwickler, Einschläge, Dreheinschläge, Umschläge, Deckelmaterialien für Gefässe oder Warenträger, Beutel, Flachbeutel, Bodenbeutel, Standbeutel, Tüten, Kissenverpakkungen, Taschen, Säcke, Warenträger, Schachteln, Bodenteile von Durchdrückpackungen, Blisterpackungen, Menueschalen, Gobelets, Dosen oder Becher unter Verwendung eines Verpackungsmaterials gemäss Anspruch 1.
